# EUROPÄISCHE PATENTSCHRIFT

(11) **EP 3 555 501 B1**
(45) Veröffentlichungstag und Bekanntmachung des Hinweises auf die Patenterteilung: **21.08.2024**
(21) Anmeldenummer: 18705329.3
(22) Anmeldetag: 31.01.2018
(51) Int. Cl.: F16J 1/00, F16J 10/04, F15B 15/14

(54) **ZYLINDER-KOLBEN-VORRICHTUNG**
CYLINDER-PISTON DEVICE
DISPOSITIF DE CYLINDRE-PISTON

(30) Priorität: 31.01.2017 DE 102017000857
(43) Veröffentlichungstag der Anmeldung: 23.10.2019
(73) Patentinhaber: Liebherr-Components Kirchdorf GmbH, 88457 Kirchdorf (DE)
(72) Erfinder: LAVERGNE, Hans-Peter, 87779 Trunkelsberg (DE); STAIMER, Anton, 87727 Babenhausen (DE)
(74) Vertreter: Laufhütte, Dieter
(86) Internationale Anmeldenummer: PCT/EP2018/052330
(87) Internationale Veröffentlichungsnummer: WO 2018/141762

(56) Entgegenhaltungen:
- WO-A1-03/042548
- DE-A1- 102014 214 512
- DE-A1- 4 430 502
- DE-U- 1 729 909
- DE-U1- 29 913 762
- FR-A- 1 155 390
- GB-A- 1 107 647
- GB-A- 2 033 537
- US-A- 3 286 737
- US-A1- 2013 008 306

## Beschreibung

Die Erfindung betrifft eine Zylinder-Kolben-Vorrichtung, mit einem Zylinder, an dessen Innenseite eine als Beschichtung ausgebildete Dichtung vorgesehen ist und mit wenigstens einem Kolben, an dessen radial äußerer Seite wenigstens zwei sich in radialer Richtung unterschiedlich weit erstreckende Außenabschnitte vorgesehen sind.

Bei aus dem Stand der Technik bekannten Zylinder-Kolben-Vorrichtungen ist es üblich, die Abdichtung und/oder die Führung des Kolbens bzw. Hydraulikkolbens innerhalb des Zylinders durch eine Kombination von Dichtringen und Führungsbändern zu realisieren. Diese Komponenten werden dabei in bekannter Weise in entsprechende Nuten in die Außenkontur des Kolbens eingesetzt.

Die bekannten Zylinder-Kolben-Vorrichtungen können dabei als Hydraulikzylinder bzw. als Hydraulikaktuatoren, als Hydraulikspeicher oder auch als entsprechende pneumatische Komponenten ausgeführt sein. Der nachfolgend beschriebene Erfindungsgedanke ist ebenso in vielfältiger Weise bei unterschiedlichen Zylinder-Kolben-Vorrichtungen entsprechend anwendbar.

Bei den aus dem Stand der Technik bekannten Zylinder-Kolben-Vorrichtungen tritt das Problem auf, dass die zur Aufnahme der Dichtringe und/oder der Führungsbänder erforderlichen Nuten umständlich an der Außenkontor des HydraulicKolbens hergestellt werden müssen. Weiterhin erfordert die Montage der Zylinder-Kolben-Vorrichtungen aus ihren Einzelteilen umständliche Arbeitsschritte zum Einsetzen der Dichtringe und ggf. weiterer Komponenten an den Hydraulik-Kolben. Ebenfalls nachteilig an den bekannten Zylinder-Kolben-Vorrichtungen ist, dass die dabei verwendeten Dichtringe üblicherweise eine nur geringe axiale Erstreckung aufweisen und unter anderem auch dadurch anfällig für Beschädigungen sind, welche zu einer Verringerung bzw. zu einem Verlust der zum korrekten Funktionieren der Zylinder-Kolben-Vorrichtung erforderliche Dichtwirkung führen können.

Vor diesem Hintergrund ist es Aufgabe der Erfindung, eine verbesserte Zylinder-Kolben-Vorrichtung bereitzustellen, die insbesondere einfacher herzustellen und einfacher zu montieren ist. Ferner soll die erfindungsgemäße Zylinder-Kolben-Vorrichtung weniger anfällig für Dichtverluste bzw. für Beschädigungen der darin eingesetzten Dichtungseinrichtungen sein.

Eine weitere Zylinder-Kolben-Vorrichtung aus dem Stand der Technik ist z.B. bekannt aus der DE 44 30 502 A1.

Diese Aufgabe wird durch eine Zylinder-Kolben-Vorrichtung mit den Merkmalen des Anspruchs 1 gelöst. Vorteilhafte Ausgestaltungen sind Gegenstand der Unteransprüche. Demnach ist eine Zylinder-Kolben-Vorrichtung mit einem Zylinder vorgesehen, an dessen Innenseite eine als Beschichtung ausgebildete Dichtung vorgesehen ist und mit wenigstens einem Kolben, der an dessen radial äußerer Seite wenigstens zwei sich in radialer Richtung unterschiedlich weit erstreckende Außenabschnitte vorgesehen sind.

Der sich radial weiter nach außen erstreckende Außenabschnitt bzw. die entsprechende Erhöhung kann beim Verschieben des Kolbens mit der beschichteten Innenseite des Zylinders in Kontakt stehen und hierdurch eine Dichtwirkung und/oder Führungswirkung bereitstellen bzw. verstärken. Die Dichtwirkung betrifft hierbei die Abdichtung zwischen den zwei axial beabstandeten und fluidisch trennbaren Kammern der Zylinder-Kolben-Vorrichtung. Eine derartige Dichtstelle kann auch die Führungsfunktion des Kolbens innerhalb des Zylinders übernehmen.

Bei dem sich radial weiter nach außen erstreckenden Außenabschnitt handelt es sich um keine übliche Kolben-Dichtung bzw. um keinen Dichtring und kein Führungsband. Vielmehr kann der sich radial weiter nach Außen erstreckende Außenabschnitt aus einem Material gefertigt sein, welches insbesondere im Zusammenwirken mit der Innenbeschichtung des Zylinders eine Dichtwirkung aufweist.

Es ist somit vorteilhafterweise nicht nötig, eine Nut zur Aufnahme von an sich bekannten Dichtungseinrichtungen in der Außenkontor des Kolbens vorzusehen oder eine umständliche manuelle Montage von Dichtungseinrichtungen am Kolben durchzuführen.

Der wenigstens eine sich radial weniger weit nach außen erstreckende Außenabschnitt kann beispielsweise als einfacher Radius an einem Kantenbereich des Kolbens ausgebildet sein.

Erfindungsgemäß ist an wenigstens einer Seite des Kolbens eine von einer Wandung umgebene Ausnehmung vorgesehen.

Die Ausnehmung ist wenigstens teilweise in einem Bereich des Kolbens angeordnet, in dem an seiner radial äußersten Stelle der sich radial weiter nach Außen erstreckende Abschnitt vorgesehen ist. Wenn in der Ausnehmung ein entsprechend hoher Druck auf die Wandung anliegt, so kann über die Wandung eine Kraft auf den sich radial weiter nach Außen erstreckenden Außenabschnitt ausgeübt werden und dieser somit an die Innenwandung des Zylinders zum Abdichtung der entsprechende Bereiche der Zylinder-Kolben-Vorrichtung angedrückt werden.

In einer weiteren bevorzugten Ausführung ist denkbar, dass der Kolben an zwei gegenüberliegenden Seiten je eine Ausnehmung umfasst, wobei insbesondere die beiden Ausnehmungen einen wenigstens Teilweise trapezförmigen Querschnitt aufweisen und weiter insbesondere die beiden Ausnehmungen von Wandungen umgeben sind.

Je nach dem, an welcher Seite der Zylinder-Kolben-Vorrichtung der größere von wenigstens zwei innerhalb der Zylinder-Kolben-Vorrichtung getrennt einstellbaren Drücken herrscht, kann die mit dem höheren Druck beaufschlagte Seite über die entsprechende Wandung auf dem sich in radialer Richtung weiter nach Außen erstreckenden Abschnitt einwirken und so zur erfindungsgemäßen Abdichtung der Zylinder-Kolben-Vorrichtung genutzt werden.

In einer weiteren bevorzugten Ausführung ist denkbar, dass der Kolben eine Kolbenstange und einen damit gekoppelten Kolbenkopf umfasst, wobei insbesondere der Kolbenkopf eine radial innen angeordnete Durchführung umfasst, die zum Koppeln der Kolbenstange mit dem Kolbenkopf ausgebildet ist.

In einer weiteren bevorzugten Ausführung ist denkbar, dass die Durchführung zum Aufnehmen wenigstens eines Teils der Kolbenstange und/oder wenigstens eines Feststellmittels ausgebildet ist und/oder das insbesondere ein radial äußerer Bereich des Kolbenkopfs symmetrisch aufgebaut ist.

Erfindungsgemäß ist der sich radial weiter nach außen erstreckende Außenabschnitt durch Anformen von wenigstens einer Erhebung am Kolben hergestellt.

Der sich radial weiter nach Außen erstreckende Außenabschnitt gleitet bzw. läuft entsprechend direkt auf der Innenbeschichtung des Zylinders und die dabei gebildete Dichtstelle ist bzw. ermöglicht gleichzeitig auch die Führung des Kolbens innerhalb des Zylinders. Demnach kann erfindungsgemäß eine kombinierte Dicht- und Führungseinrichtung am Kolben vorgesehen sein, bei der derselbe Kontaktbereich zwischen Kolben und Zylinder die Abdichtfunktion und die Führung des Kolbens innerhalb des Zylinders erfüllt.

In einer weiteren bevorzugten Ausführung ist denkbar, dass der sich radial weiter nach Außen erstreckende zweite Außenabschnitt wenigstens teilweise in einer Au-ßenausnehmung angeformt ist. Die Außenausnehmung kann am Kolbenkopf vor dem Anformen des Außenabschnitts bereitgestellt werden.

In einer weiteren bevorzugten Ausführung ist denkbar, dass der zweite Außenabschnitt sich auf eine Länge von mehr als 50%, insbesondere mehr als 75% und besonders bevorzugt mehr als 90% der Länge des Kolbens in axialer Richtung erstreckt. In einer besonders bevorzugten Ausführung kann ferner vorgesehen sein, dass der zweite Außenabschnitt und der Kolben wenigstens teilweise stoffschlüssig miteinander verbunden sind. Dabei ist denkbar, dass der zweite Außenabschnitt an das restliche Gefüge des Kolbens beispielsweise angeklebt, verschweiß oder auf andere Art aufgetragen wird. Denkbar ist auch, dass der zweite Außenabschnitt auf den Kolben bzw. auf den Kolbenkopf aufgeschrumpft ist bzw. kraftschlüssig mit diesem verbunden ist.

In einer weiteren bevorzugten Ausführung ist denkbar, dass der zweite Außenabschnitt wenigstens teilweise hohlzylinderförmig ausgebildet ist, wobei der Innendurchmesser des zweiten Außenabschnitts weniger als 50%, insbesondere weniger als 25% und besonders bevorzugt weniger als 10% von der axialen Erstreckung des zweiten Außenabschnitt abweicht.

Weitere Einzelheiten und Vorteile der Erfindung sind anhand der in der einzelnen Figur beispielhaft gezeigten Ausführung erläutert.

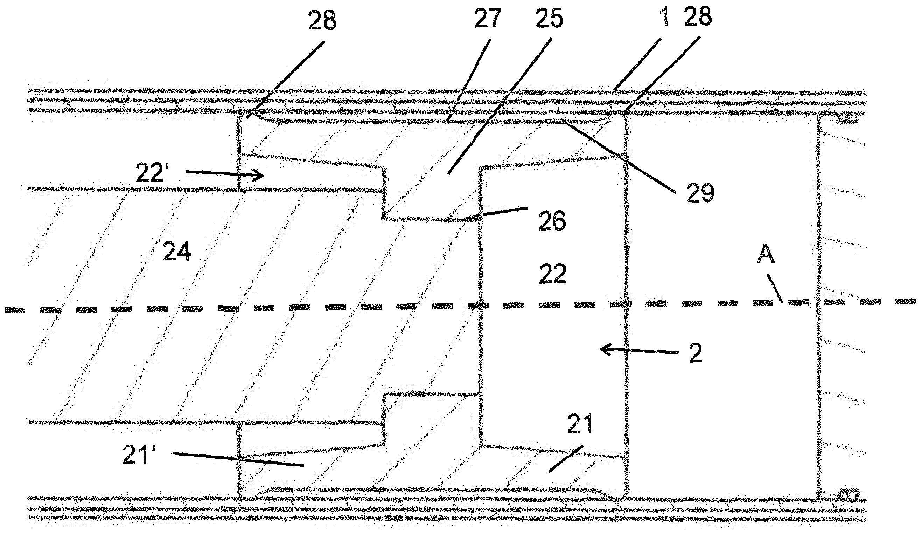

Die Figur zeigt einen Teil einer erfindungsgemäßen Zylinder-Kolben-Vorrichtung in einer Querschnittsansicht. Innerhalb des Zylinders 1 ist ein Kolben 2 verschieblich gelagert, der an wenigstens einer Seite eine von einer Wandung 21 umgebene Ausnehmung 22 umfassen kann.

Es können auch zwei axial voneinander beabstandete Ausnehmungen 22, 22' vorgesehen sein, wobei es sich bei den die Ausnehmungen 22, 22' umgebenden Wandungen 21, 21' um hohlzylinderförmige Abschnitte handeln kann oder um Abschnitte handeln kann, welche hohlzylinderähnlich oder teilweise hohlzylinderförmig aufgebaut sind. Die Wandungen 21, 21' können einen radial außen hohlzylinderförmigen Abschnitt umfassen, der an seiner radialen Innenseite kegelstumpfförmig ausgespart ist. Die Wandungen 21, 21' können dabei einstückig mit dem restlichen Gefüge eines Kolbenkopfs 25 des Kolbens 2 ausgebildet sein.

Die Innenseite des Zylinders 1 kann beschichtet sein. Die Beschichtung kann dabei in einem separaten Arbeitsschritt während der Herstellung der Zylinder-Kolben-Vorrichtung auf den Zylinder 1 aufgetragen werden. Die Beschichtung kann beispielsweise eine Kunststoffbeschichtung sein. Der Zylinder 1 und/oder der Kolben 2 können aus einem Verbundwerkstoff oder aus Metall gefertigt sein. Denkbar ist auch eine gemischte Materialauswahl, bei der eine der Komponenten aus Metall und die andere aus einem Verbundwerkstoff gefertigt ist.

Eine Kolbenstange 24 kann wenigstens zwei axial voneinander beabstandete Abschnitte mit unterschiedlichen Durchmessern umfassen, wobei der Durchmesser der Kolbenstange 24 in dem Bereich, in dem diese mit dem Kolbenkopf 25 in Kontakt ist, der kleinere oder der kleinste Durchmesser der Kolbenstange 24 sein kann.

Der größere bzw. der größte Durchmesser der Kolbenstange 24 kann wenigstens halb so groß sein wie der Durchmesser des Kolbenkopfs 25. Die axiale Abmessung bzw. Erstreckung des Kolbenkopfs 25 kann um weniger als 50%, insbesondere um weniger als 25% und besonders bevorzugt um weniger als 10% von der radialen Abmessung bzw. vom Durchmesser des Kolbenkopfs 25 abweichen.

Zwischen den Bereichen mit unterschiedlichen Durchmessern der Kolbenstange 24 kann ein Anschlag bzw. eine Schulter vorgesehen sein, mittels dem bzw. mittels der die Kolbenstange 24 gegen den Kolbenkopf 25 in wenigstens eine Richtung feststellbar ist.

An der radial äußeren Seite des Kolbens 2 bzw. des Kolbenkopfs 25 können wenigstens zwei sich in radialer Richtung unterschiedlich weit erstreckende Außenabschnitte 27, 28 vorgesehen sein. Im Ausführungsbeispiel der Figur ist ein axial mittig angeordneter, sich radial weniger nach Außen erstreckender zweite Außenabschnitt 27 von zwei axial äußeren und sich radial weiter weit nach Außen erstreckenden Außenabschnitten 28 eingefasst bzw. umgeben.

Der sich radial weiter nach Außen ersteckende Außenabschnitt 28 kann durch Anformen einer Erhebung oder von mehreren Erhebungen herausgebildet sein. Alternativ oder zusätzlich ist auch denkbar, dass der sich radial weniger weit ersteckende erste zweite 28 oder die beiden ersten Abschnitte 28 durch Abtragen des Materials des Kolbenkopfs 25 im Bereich der zweiten Abschnitte 28 hergestellt sind.

An der radial äußeren Seite des Kolbenkopfs 25 kann eine Außenausnehmung 29 vorgesehen sein, in welcher der zweite Außenabschnitt 27 angeformt ist. Die Ausnehmung kann dabei im Lauf des Herstellungsprozesses erzeugt werden und in einem darauf folgenden Schritt kann dann der zweite Außenabschnitt 27 darin oder in dem entsprechenden Bereich geformt bzw. ausgebildet oder angeformt werden.

In einem radial und/oder axial innen gelegenen Bereich des Kolbenkopfs 25 kann eine Durchführung 26 vorgesehen sein, die zum Koppeln der Kolbenstange 24 mit dem Kolbenkopf 25 ausgebildet sein kann. In einer einfachen Ausführung kann die Durchführung 26 ein Innengewinde und die Kolbenstange 24 ein entsprechendes Außengewinde umfassen, welche zum Koppeln des Kolbenkopfs 25 an der Kolbenstange 24 miteinander verschraubt werden können.

In einer alternativen oder zusätzlichen Ausführung kann die Durchführung 26 oder ein der Durchführung 26 benachbarter Teil des Kolbenkopfs 25 zur Aufnahme wenigstens eines Teils der Kolbenstange 24 und/oder eines Feststellmittels ausgebildet sein.

Denkbar ist beispielsweise, dass an einer der Stangenseite des Kolbenkopfs 25 gegenüberliegenden Seite ein oder mehrere Aufnahmebereiche für eine Mutter oder einen Schraube vorgesehen sind, die mit der Kolbenstange 24 zum Feststellen der Kolbenstange 24 am Kolbenkopf 25 verschraubbar ist bzw. sind.

Wie der Figur ferner zu entnehmen ist, kann der Kolbenkopf 25 wenigstens teilweise symmetrisch aufgebaut sein. Denkbar ist, dass der Kolbenkopf 25 relativ zu einer bezogen auf die Längsachse A der Zylinder-Kolben-Vorrichtung senkrechten Fläche spiegelsymmetrisch aufgebaut ist und/oder dass er bezogen auf die Längsachse A der Zylinder-Kolben-Vorrichtung wenigstens teilweise rotationssymmetrische Abschnitte aufweist. Etwaige am Kolbenkopf 25 vorgesehene Gewinde können von der Symmetrie selbstverständlich ausgenommen sein.

Ein radial innerer Bereich des Kolbenkopfs 25 kann wenigstens teilweise hohlzylinderförmig ausgebildet sein und die Wandungen 21, 21' können sich direkt an diesen radial inneren Bereich anschließen bzw. einstückig mit dem radial inneren Bereich gefertigt sein. In einer besonders einfachen Ausführung kann der Kolbenkopf 25 aus dem hohlzylinderförmigen radial inneren Bereich und genau einer sich direkt daran anschließenden Wandung 21 bestehen. Die Ausnehmung 22 kann wenigstens teilweise von der Wandung 21 und von dem radial inneren Bereich des Kolbenkopfs 25 begrenzt sein. Die Ausnehmung 22 kann ferner von einem planaren Abschnitt der Kolbenstange 24 begrenzt sein. Bei dem planaren Abschnitt kann es sich um einen Endabschnitt der Kolbenstange 24 handeln.

Von der Erfindung können Zylinder-Kolben-Vorrichtungen nahezu jedweder Bauart umfasst sein, die einen insbesondere aus einem Faserverbundwerkstoff gefertigten Zylinder 1 umfassen können. So sind beispielsweise einfach oder doppelt wirkende Zylinder-Kolben-Vorrichtungen genauso denkbar, wie Zylinder-Kolben-Vorrichtungen, bei denen eine Kolbenstange 24 auf beiden Seiten des Kolbenkopfs 25 vorgesehen ist.

Der Kolben 2 kann innerhalb des Rohrs bzw. des Zylinders 1 so gestaltet sein, dass er sich durch seine becherförmigen Enden bzw. Ausnehmungen 22, 22' und Wandungen 21, 21' und die außenliegende Dichtung bzw. den zweiten Außenabschnitt 27 unter Druck aufweitet und/oder der Aufweitung des Rohrs bzw. des Zylinders 1 folgt. Entsprechendes gilt auch für eine Ausführungsform mit je einer Ausnehmung 22 und einer Wandung 21. Dabei kompensiert der Kolben 2 die Aufweitung des Zylinders 1 und erreicht eine Reduzierung der Aufweitung des Dichtspalts zwischen dem Kolben 2 und dem Rohr bzw. dem Zylinder 1. Der Kolben 2 kann ein- oder mehrteilig sein und Komponenten aus Metall und/oder Kunststoff umfassen.

Es kann ferner vorgesehen sein, dass der zweite Außenabschnitt 27 sich in axialer Richtung auf einer Länge erstreckt, die mehr als 50%, insbesondere mehr als 75% und besonders bevorzugt und wie in der Figur gezeigt mehr als 90% der axialen Erstreckung des Kolbenkopf 25 entspricht.

Die axiale Richtung entspricht vorliegend der Bewegungsrichtung des Kolbens 2 innerhalb des Zylinder 1 und ist durch die Achse A gekennzeichnet. Die radialen Richtungen sind in einer dazu senkrechten Ebene verortet.

Erfindungsgemäß kann sichergestellt werden, dass eine möglichst große Dicht-und/oder Führungsfläche zum Führen des Kolbens 2 innerhalb des Zylinders 1 bereitgestellt ist. Eine große Fläche verringert dabei die Abnutzung des zweiten Au-ßenabschnitts 27, welche beim Verfahren des Kolbens 2 innerhalb des Zylinders 1 auftritt.

Der zweite Außenabschnitt 27 und der Kolben 2 bzw. der Kolbenkopf 25 können wenigstens abschnittsweise miteinander verbunden sein. Denkbar ist auch eine einstückige Fertigung des Kolbenkopfs 25 mit einem integrierten zweiten Außenabschnitt 27.

Der zweite Außenabschnitt 27 kann wenigstens teilweise hohlzylinderförmig ausgebildet sein, wobei der Innendurchmesser des zweiten Außenabschnitts 27 um weniger als 50%, insbesondere weniger als 25% und besonders bevorzugt weniger als 10% von der axialen Erstreckung des zweiten Außenabschnitts 27 abweicht.

Wie der Figur zu entnehmen ist, kann der zweite Außenabschnitt 27 nicht vollständig hohlzylinderförmig ausgebildet sein, sondern sein insbesondere axialen Außenbereiche können abgerundete bzw. wenigstens teilweise torusförmige oder torusabschnittförmige Bereiche umfassen.

Der zweite Außenabschnitt 27 kann rotationssymmetrisch ausgebildet sein. Es ist auch denkbar, mehr als einen zweiten Außenabschnitt 27 bereitzustellen, wobei beispielsweise zwei in axialer Richtung voneinander beabstandete zweite Abschnitte 27 denkbar sind, die von einem sich radial weniger weit nach außen erstreckenden, beispielsweise axial mittig angeordnetem ersten Abschnitt 28 getrennt sind.

## Patentansprüche

1. Zylinder-Kolben-Vorrichtung mit einem Zylinder (1), an dessen Innenseite eine als Beschichtung ausgebildete Dichtung vorgesehen ist und mit wenigstens einem Kolben (2), an dessen radial äußerer Seite wenigstens zwei sich in radialer Richtung unterschiedlich weit erstreckende Außenabschnitte (27, 28) vorgesehen sind, wobei der sich radial weiter nach außen erstreckende Außenabschnitt (28) direkt auf der beschichteten Innenseite des Zylinders (1) gleitet und hierdurch eine Dichtwirkung zur Abdichtung zwischen zwei axial beabstandeten und fluidisch trennbaren Zylinderkammern bereitstellt,
**dadurch gekennzeichnet,**
**dass** an wenigstens einer Seite des Kolbens (2) eine von einer Wandung (21) umgebene und mit einer der Zylinderkammern fluidisch verbundene Ausnehmung (22) vorgesehen ist, welche zumindest teilweise in einem Bereich des Kolbens (2) angeordnet ist, in dem an seiner radial äußersten Seite der sich radial weiter nach außen erstreckende Außenabschnitt (28) vorgesehen ist, wobei der Kolben (2) derart ausgebildet ist, dass über die Wandung (21) eine Kraft auf den sich radial weiter nach außen erstreckenden Außenabschnitt (28) ausgeübt wird und dieser somit an die als Beschichtung ausgebildete Dichtung des Zylinders (1) zur Abdichtung der Zylinderkammern angedrückt wird, wenn in der Ausnehmung (22) ein entsprechend hoher Druck auf die Wandung (21) anliegt, wobei der sich radial weiter nach außen erstreckende Außenabschnitt (28) durch Anformen von wenigstens einer Erhebung am Kolben (2) herausgebildet ist und gleichzeitig der Führung des Kolbens (2) innerhalb des Zylinders (1) dient, und wobei die Ausnehmung (22) und Wandung (21) ein becherförmiges Ende des Kolbens (2) bilden.

2. Zylinder-Kolben-Vorrichtung nach Anspruch 1, **dadurch gekennzeichnet, dass** der Kolben (2) an zwei gegenüberliegenden Seiten je eine Ausnehmung (22, 22') umfasst, wobei insbesondere die beiden Ausnehmungen (22, 22') einen wenigstens Teilweise trapezförmigen Querschnitt aufweisen und weiter insbesondere die beiden Ausnehmungen (22, 22') von Wandungen (21, 21`) umgeben sind.

3. Zylinder-Kolben-Vorrichtung nach Anspruch 1 oder 2, **dadurch gekennzeichnet, dass** der Kolben (2) eine Kolbenstange (24) und einen damit gekoppelten Kolbenkopf (25) umfasst, wobei insbesondere der Kolbenkopf (25) eine radial innen angeordnete Durchführung (26) umfasst, die zum Koppeln der Kolbenstange (24) mit dem Kolbenkopf (25) ausgebildet ist.

4. Zylinder-Kolben-Vorrichtung nach Anspruch 3, **dadurch gekennzeichnet, dass** die Durchführung (26) zum Aufnehmen wenigstens eines Teils der Kolbenstange (24) und/oder wenigstens eines Feststellmittels ausgebildet ist und/oder dass insbesondere ein radial äußerer Bereich des Kolbenkopfs (25) symmetrisch aufgebaut ist.

5. Zylinder-Kolben-Vorrichtung nach einem der vorhergehenden Ansprüche, **dadurch gekennzeichnet, dass** der sich radial weniger weit nach Außen erstreckende zweite Außenabschnitt (27) wenigstens teilweise durch eine Außenausnehmung (29) geformt ist.

6. Zylinder-Kolben-Vorrichtung wenigstens nach Anspruch 5, **dadurch gekennzeichnet, dass** der zweite Außenabschnitt (27) sich auf einer Länge von mehr als 50%, insbesondere mehr als 75% und besonders bevorzugt mehr als 90% der Länge des Kolbenkopfs (25) in axialer Richtung erstreckt.

7. Zylinder-Kolben-Vorrichtung nach einem der vorhergehenden Ansprüche, **dadurch gekennzeichnet, dass** der zweite Außenabschnitt (27) und der Kolben (2) wenigstens teilweise stoffschlüssig miteinander verbunden sind.

8. Zylinder-Kolben-Vorrichtung nach einem der vorhergehenden Ansprüche, **dadurch gekennzeichnet, dass** der zweite Außenabschnitt (27) wenigstens teilweise hohlzylinderförmig ausgebildet ist, wobei der Innendurchmesser des zweiten Außenabschnitts (27) weniger als 50%, insbesondere weniger als 25% und besonders bevorzugt weniger als 10% von der axialen Erstreckung des zweiten Außenabschnitt (27) abweicht.

## Claims

1. Cylinder-piston device with a cylinder (1), on the inside of which a seal configured as a coating is provided, and with at least one piston (2), on the radially outer side of which at least two outer sections (27, 28) extending different distances in a radial direction are provided, wherein the outer section (28) extending radially further outwards slides directly on the coated inside of the cylinder (1) and hereby provides a sealing effect for sealing between two axially spaced and fluidically separable cylinder chambers,
**characterised in that**
on at least one side of the piston (2) a recess (22) enclosed by a wall (21) and connected fluidically to one of the cylinder chambers is provided, which recess is arranged at least partially in an area of the piston (2) in which on its radially outermost side the outer section (28) extending radially further outwards is provided, wherein the piston (2) is configured such that via the wall (21) a force is exerted on the outer section (28) extending radially further outwards and this is thus pressed onto the seal of the cylinder (1) configured as a coating to seal the cylinder chambers if a suitably high pressure exists adjacent to the wall (21) in the recess (22), wherein the outer section (28) extending radially further outwards is developed by the forming of at least one elevation on the piston (2) and at the same time serves to guide the piston (2) inside the cylinder (1), and wherein the recess (22) and wall (21) form a cup-shaped end of the piston (2).

2. Cylinder-piston device according to claim 1, **characterised in that** the piston (2) comprises a recess (22, 22') respectively on two opposing sides, wherein in particular the two recesses (22, 22') have an at least partially trapezoidal cross section and furthermore in particular the two recesses (22, 22') are enclosed by walls (21, 21').

3. Cylinder-piston device according to claim 1 or 2, **characterised in that** the piston (2) comprises a piston rod (24) and a piston head (25) coupled thereto, wherein in particular the piston head (25) comprises a bushing (26) arranged radially inside, which is configured to couple the piston rod (24) to the piston head (25).

4. Cylinder-piston device according to claim 3, **characterised in that** the bushing (26) is configured to receive at least a part of the piston rod (24) and/or at least a locking means and/or that in particular a radially outer region of the piston head (25) is constructed symmetrically.

5. Cylinder-piston device according to any one of the preceding claims, **characterised in that** the second outer section (27) extending radially less far outwards is formed at least partially by an outer recess (29).

6. Cylinder-piston device at least according to claim 5, **characterised in that** the second outer section (27) extends over a length of more than 50%, in particular more than 75% and particularly preferably more than 90% of the length of the piston head (25) in an axial direction.

7. Cylinder-piston device according to any one of the preceding claims, **characterised in that** the second outer section (27) and the piston (2) are at least partially materially bonded to one another.

8. Cylinder-piston device according to any one of the preceding claims, **characterised in that** the second outer section (27) is configured at least partially in the form of a hollow cylinder, wherein the inner diameter of the second outer section (27) deviates by less than 50%, in particular less than 25% and particularly preferably less than 10% from the axial extension of the second outer section (27).

## Revendications

1. Dispositif à cylindre et piston avec un cylindre (1) sur le côté intérieur duquel est prévu un joint d'étanchéité réalisé sous forme de revêtement et avec au moins un piston (2) sur le côté radialement extérieur duquel sont prévus au moins deux sections extérieures (27, 28) s'étendant sur des distances différentes dans la direction radiale, la section extérieurs (28) s'étendant radialement plus loin vers l'extérieur glissant directement sur le côté intérieur revêtue du cylindre (1) et fournissant ainsi un effet d'étanchéité pour l'étanchéité entre deux chambres de cylindre espacées axialement et séparables fluidiquement,
**caractérisé en ce**
**qu'**il est prévu sur au moins un côté du piston (2) un évidement (22) entouré par une paroi (21) et relié fluidiquement à l'une des chambres de cylindre, lequel évidement est agencé au moins partiellement dans une zone du piston (2) dans laquelle est prévue sur son côté radialement le plus extérieur la section extérieure (28) s'étendant radialement plus loin vers l'extérieur, le piston (2) étant réalisé de telle sorte qu'une force est exercée par l'intermédiaire de la paroi (21) sur la section extérieure (28) s'étendant radialement plus loin vers l'extérieur et celle-ci est ainsi pressée contre le joint d'étanchéité du cylindre (1) réalisé sous forme de revêtement pour étanchéifier les chambres de cylindre, lorsqu'une pression élevée correspondante est appliquée sur la paroi (21) dans l'évidement (22), la section extérieure (28) s'étendant radialement plus loin vers l'extérieur étant formée par moulage d'au moins un bossage sur le piston (2) et servant en même temps au guidage du piston (2) à l'intérieur du cylindre (1), et l'évidement (22) et la paroi (21) formant une extrémité en forme de godet du piston (2).

2. Dispositif à cylindre et piston selon la revendication 1, **caractérisé en ce que** le piston (2) comprend un évidement (22, 22') sur chacun de deux côtés opposés, les deux évidements (22, 22') présentant notamment une section transversale au moins partiellement trapézoïdale et les deux évidements (22, 22') étant en outre notamment entourés de parois (21, 21').

3. Dispositif à cylindre et piston selon la revendication 1 ou 2, **caractérisé en ce que** le piston (2) comprend une tige de piston (24) et une tête de piston (25) couplée à celle-ci, la tête de piston (25) comprenant notamment un passage (26) agencé radialement à l'intérieur, qui est réalisé pour coupler la tige de piston (24) à la tête de piston (25).

4. Dispositif à cylindre et piston selon la revendication 3, **caractérisé en ce que** le passage (26) est réalisé pour recevoir au moins une partie de la tige de piston (24) et/ou au moins un moyen de blocage et/ou **en ce que**, notamment, une zone radialement extérieure de la tête de piston (25) est conçue sous forme symétrique.

5. Dispositif à cylindre et piston selon l'une quelconque des revendications précédentes, **caractérisé en ce que** la deuxième section extérieure (27) s'étendant radialement moins loin vers l'extérieur est au moins partiellement formée par un évidement extérieur (29).

6. Dispositif à cylindre et piston au moins selon la revendication 5, **caractérisé en ce que** la deuxième section extérieure (27) s'étend dans la direction axiale sur une longueur supérieure à 50 %, notamment supérieure à 75 %, et de manière particulièrement préférée supérieure à 90 % de la longueur de la tête de piston (25).

7. Dispositif à cylindre et piston selon l'une quelconque des revendications précédentes, **caractérisé en ce que** la deuxième section extérieure (27) et le piston (2) sont au moins partiellement reliés entre eux par liaison de matière.

8. Dispositif à cylindre et piston selon l'une quelconque des revendications précédentes, **caractérisé en ce que** la deuxième section extérieure (27) est réalisée au moins partiellement en forme de cylindre creux, le diamètre intérieur de la deuxième section extérieure (27) s'écartant de moins de 50 %, notamment de moins de 25 % et de manière particulièrement préférée de moins de 10 % de l'extension axiale de la deuxième section extérieure (27).
